Europäisches Patentamt

(19) European Patent Office

Office européen des brevets

(11) Numéro de publication: **0 066 502**
**B1**

(12) **FASCICULE DE BREVET EUROPEEN**

(45) Date de publication du fascicule du brevet:
09.04.86

(51) Int. Cl.⁴: **H 05 B 7/144,** B 23 K 9/06

(21) Numéro de dépôt: 82400917.9

(22) Date de dépôt: 17.05.82

(54) **Procédé et dispositif pour contrôler la longueur d'un arc électrique.**

(30) Priorité: 19.05.81 CA 377808

(43) Date de publication de la demande:
08.12.82 Bulletin 82/49

(45) Mention de la délivrance du brevet:
09.04.86 Bulletin 86/15

(84) Etats contractants désignés:
AT BE CH DE FR GB IT LI LU NL SE

(56) Documents cités:
FR - A - 1 363 304
FR - A - 1 418 702
FR - A - 2 039 173
FR - A - 2 194 521
FR - A - 2 364 086
GB - A - 1 430 824

(73) Titulaire: **HYDRO-QUEBEC, 75, Boulevard Dorchester
Ouest, Montréal Québec H2Z 1A4 (CA)**

(72) Inventeur: **Drouet, Michel G., 1825 du Bocage, St-Bruno
(Québec) J3V 4M7 (CA)**
Inventeur: **Nadeau, François, 1079 Mont-Royal,
(Québec) H2V 2H5 (CA)**

(74) Mandataire: **Martinet & Lapoux, 62, rue des Mathurins,
F-75008 Paris (FR)**

LIBER, STOCKHOLM 1986

## Description

La présente invention concerne un procédé ainsi qu'un dispositif pour contrôler la longueur d'un arc électrique entre deux éléments d'une machine à arc, tel qu'un four à arc ou un appareil de soudure à arc du type gaz-tungstène ou gazmétal à courant pulsatoire ou non, avec ou sans apport de métal en détectant le son de l'arc.

Dans le domaine très particulier des machines à arc telles que celles précédemment mentionnées, il est connu que la valeur de la puissance électrique dissipée dans l'arc est fonction de la longueur de ce dernier. Il en résulte que pour obtenir de bons résultats avec une machine à arc tel qu'un pour, un appareil de soudure ou une lampe à arc, il est indispensable d'ajuster et de contrôler la distance séparant les deux éléments de la machine entre lesquels l'arc est créé, et ce en particulier lorsque l'un ou l'autre de ces deux éléments est consommé par l'arc au cours du fonctionnement.

Ainsi, dans le cas particulier des fours à arc, il est nécessaire de contrôler de façon permanente l'ajustement de la distance entre l'électrode et le bain de fusion ou les deux électrodes à la fois pour maintenir la demande en puissance du réseau d'alimentation, pour réduire l'érosion du réfractaire et bien entendu pour réduire l'érosion des électrodes.

De même, dans le cas particulier des appareils de soudure à l'arc, il est nécessaire de contrôler en permance la distance entre les électrodes ou entre l'électrode et la pièce à souder puisque la qualité et la régularité du cordon de soudure dépend directement de cette distance.

Afin d'assurer ce contrôle nécessaire de la longueur de l'arc électrique dans une machine à arc, il a été jusqu'à présent proposé de mesurer la valeur de la chute de tension entre les deux extrémités de l'arc et d'asservir au moins l'un des éléments (ou électrodes) de la machine à arc à cette valeur. En effet, il est connu que la valeur de la chute de tension dans l'arc est fonction de la longueur de ce dernier.

Pour mesurer cette valeur de la chute de tension dans l'arc, un procédé conventionnel consiste à relier les bornes d'un instrument de mesure à des contacts situés à proximité des extrémités de l'arc à travers des fils conducteurs. Cette façon de procéder qui est celle couramment utilisée actuellement et qui consiste donc à monter un circuit de mesure en dérivation par rapport au circuit d'alimentation de l'arc, présente plusieurs inconvénients majeurs. Parmi ces inconvénients, on peut tout d'abord mentionner le fait que l'instrument de mesure n'est pas isolé électriquement du circuit d'alimentation de l'arc. Cette absence d'isolation électrique est source de très graves problèmes lorsque la machine à arc opère à haute tension ou lorsque l'alimentation de l'arc est flottante. On peut également mentionner le fait que le circuit de mesure est sujet à l'induction de tensions parasites dans le cas où le taux de variation du courant d'arc est élevé.

Un autre inconvénient majeur du procédé actuel consiste également en la difficulté de pourvoir obtenir une valeur précise de la chute de tension dans l'arc compte tenu des phénomènes secondaires tels que la chute ohmique dans les électrodes de la machine à arc et des phénomènes possibles d'induction dans le circuit d'alimentation, ces phénomènes se produisant en particulier dans le cas du four à arc triphasé. Cette difficulté à obtenir une valeur exacte de la chute de tension est de plus accrue par l'existence de chutes de tension cathodique et anodique qui faussent la mesure et d'une chute ohmique qui se produit dans le bain liquide dans le cas particulier du four à arc, lesquelles chutes "parasitaires" sont toutes très difficiles à évaluer.

Dans le domaine très particulier des machines à arc, il est également connu que l'arc électrique se formant entre les éléments de la machine produit un son audible à l'oreille humaine lorsque l'arc est créé par un courant alternatif ou un courant modulé. Il est également connu que l'amplitude du son généré par l'arc est proportionnelle à la dérivée par rapport au temps de la puissance électrique dissipée dans l'arc.

D'autre part il a déjà été suggéré dans le passé d'utiliser la valeur captée du signal acoustique généré par un arc électrique pour contrôler certains paramètres dans une opération de soudure à l'arc.

A titre d'exemple, on peut mentionner le document GB—A—1.430.824 publié le 4 avril 1976 au nom de la société japonaise Mitsui Ship Building and Engeneering Co. Ltd., qui décrit un procédé pour contrôler une opération de soudure à l'arc par mesure du signal acoustique généré par l'arc, détection de toute variation anormale du signal acoustique ainsi capté et action sur certains paramètres de soudure en fonction de l'anomalie ainsi détectée. Les paramètres mentionnés dans ce brevet britannique contrôlables par mesure du signal acoustique de l'arc sont notamment la vitesse de soudure, c'est-à-dire la vitesse à laquelle l'électrode se déplace en translation par rapport à la pièce à souder, le débit d'alimentation en plasma dans le cas d'une soudure par plasma, l'intensité du courant électrique utilisée pour former l'arc, et la vitesse à laquelle l'apport en métal s'effectue.

Ce brevet qui décrit beaucoup plus un principe théorique extrêmement large qu'un mode de réalisation pratique de ce principe, ne mentionne en aucun cas que l'on peut utiliser le signal acoustique généré par l'arc pour contrôler la longueur de ce dernier, bien que ceci soit pourtant une condition essentielle pour l'obtention d'une bonne soudure. Ce brevet ne mentionne en aucun cas non plus que l'on peut aussi utiliser le signal acoustique généré par un arc pour contrôler le fonctionnement d'un four à arc à courant continu ou triphasé, ce brevet ne faisant en effet référence qu'à des appareils de soudure. Enfin, il convient d'ajouter que ce brevet ne semble s'intéresser à la mesure du signal généré par l'arc que pour détecter et corriger les anomalies de fonctionnement se produisant au cours des opérations de soudure. En aucun cas, ce brevet ne mentionne une relation mathématique de cause à effet entre quelque paramètre de soudure que ce soit et les caractéristiques du signal acoustique mesuré et le fait que l'on peut utiliser le son pour asservir une machine à arc de façon permanente et positive.

La présente invention est basée sur le principe que si l'intensité du signal acoustique généré par un arc est directement proportionnelle à la dérivée de la puissance électrique dissipée dans l'arc en fonction du temps et si la puissance électrique dissipée dans un arc est, comme chacun sait, fonction de la longueur de cet arc, il en résulte que l'amplitude du signal acoustique généré par un arc est fonction de la longueur de ce dernier et que par conséquent cette longueur d'arc qui est un paramètre essentiel de bon fonctionnement de n'importe quelle machine à arc, peut être très facilement contrôlé par simple mesure de l'intensité du signal acoustique généré par l'arc pendant que la machine est en fonctionnement, et par l'utilisation de cette valeur mesurée pour asservir le déplacement d'au moins l'un des éléments entre lesquels l'arc est créé.

En effect, l'amplitude du signal acoustique généré par un arc alimenté par un courant électrique modulé ou alternatif étant fonction de la longueur de l'arc, toute variation de la longueur de cet arc pour une amplitude de courant donné se traduira obligatoirement par une augmentation de l'amplitude du signal acoustique produit par l'arc. Pour contrôler la longueur de l'arc électrique, il suffit donc de capter le signal acoustique généré par l'arc, de la comparer à un signal de référence et d'utiliser la valeur algébrique de la différence entre les deux signaux pour augmenter ou réduire la longueur de l'arc en agissant sur le déplacement d'au moins l'un des deux éléments entre lesquels l'arc est produit.

A ces fins, un procédé pour contrôler la longueur d'un arc électrique entre deux éléments dans une machine à arc est caractérisé en ce qu'il comprend les étapes suivantes:

— on module le courant d'alimentation de l'arc s'il ne l'est pas déjà, pour générer un signal acoustique;
— on capte le signal acoustique généré par l'arc;
— on compare l'amplitude du signal acoustique capté qui, en pratique, est une fonction directe de la longueur réelle de l'arc, à une amplitude de référence correspondant à la longueur d'arc désirée pour déterminer la valeur algébrique de leur différence; et
— on asservit le déplacement d'au moins l'un des deux éléments de la machine à arc proportionnellement à la valeur algébrique déterminée pour augmenter ou réduire la longueur réelle de l'arc et ainsi ramener ladite longueur réelle à la longueur désirée.

Avantageusement, le procédé précédent peut être adapté de façon simple à n'importe quel type de machine à arc.

Ainsi, le procédé selon l'invention peut être utilisé pour contrôler la longueur de l'arc électrique généré entre l'électrode et le bain dans un four à arc à courant continu. Puisqu'un arc généré à l'aide d'un courant continu n'émet aucun signal acoustique, il est nécessaire dans le cas particulier de cette application, de moduler très faiblement le courant continu d'alimentation de l'arc pour générer un signal acoustique. Le signal acoustique ainsi capté est filtré à sa fréquence fondamentale qui est égale à la valeur de la fréquence de modulation et son amplitude à cette fréquence est comparée à une amplitude de référence ajustable correspondant à une longueur d'arc désirée. La comparaison d'amplitudes permet de déterminer la valeur algébrique de la différence entre les amplitudes des deux signaux et de produire un signal électrique continu proportionnel que l'on peut fournir à un dispositif d'asservissement pour déplacer l'électrode par rapport au bain jusqu'à ce que la longueur réelle de l'arc soit ramenée à la longueur désirée.

Il est à signaler que le même procédé peut être utilisé pour contrôler la longueur de l'arc électrique entre l'électrode et la pièce à souder dans un appareil de soudure à arc à courant continu ou alternatif du type gaz-tungstène ou gaz-métal.

Le procédé selon l'invention peut également être utilisé, et ce de façon extrêmement avantageuse, pour contrôler simultanément les longueurs respectives des arcs électriques entre les trois électrodes et le bain d'un four à arc à courant triphasé. Dans ce cas, on filtre le signal acoustique capté à égale distance des trois électrodes, à une première fréquence égale à six fois la valeur de la fréquence du courant triphasé, on compare l'amplitude du signal acoustique ainsi filtré à ladite première fréquence, à une amplitude de référence ajustable qui correspond à une longueur d'arc désirée pour déterminer la valeur algébrique de leur différence et produire un signal électrique continu proportionnel à ladite valeur algébrique, et on fournit simultanément le signal électrique continu produit à trois dispositifs d'asservissement indépendants associés respectivement aux trois électrodes pour déplacer simultanément celles-ci toutes les trois ensemble par rapport au bain jusqu'à ce que la longueur réelle commune de leurs arcs soit ramenée à la longueur désirée.

Simultanément au premier filtrage, on peut également filtrer le signal acoustique capté à une seconde fréquence égale à deux fois la valeur de la fréquence du courant triphasé et comparer la phase du signal filtré à ladite seconde fréquence à chacune des phases de courant triphasé pour déterminer la valeur algébrique de la différence de phase du signal filtré par rapport à chacune des phases du courant triphasé et séparément produire trois signaux électriques continus et distincts qui sont fonction des valeurs algébriques respectives de la différence entre la phase du signal filtré et chacune des phases du courant triphasé. En fournissant les signaux électriques ainsi produits séparément aux trois dispositifs d'asservissement associés respectivement aux trois électrodes du four, on asservit individuellement les trois électrodes alimentées chacune par une phase donnée, au signal électrique produit pour chaque phase du courant de façon à ce qu'une électrode alimentée par une phase donnée soit déplacée séparément des deux autres électrodes par rapport au bain jusqu'à ce que la longueur de son arc redevienne égale à la longueur des arcs des deux autres électrodes et par conséquent à la longueur commune désirée pour les trois arcs.

Il est à signaler que le procédé précédemment décrit comme étant utilisable avec un four à arc à courant triphasé, est particulièrement intéressant puisque, pour contrôler simultanément les trois électrodes d'un four à arc à courant triphasé, le procédé actuel consiste à résoudre un jeu d'équations différentielles assez compliquées en tenant compte de la chute ohmique (extrêmement difficile à déterminer en pratique) et de la valeur mesurée de la tension au niveau de chaque électrode. Cette résolution est non seulement très peu précise, mais en outre fait appel à un temps de calcul extrémement long même lorsque ce calcul est effectué par ordinateur, ce qui est bien peu compatible avec les besoins d'asservissement quasi-immédiat requis en pratique pour la distance entre chaque électrode et le bain.

Le procédé selon l'invention peut également être utilisé pour contrôler la longueur de l'arc électrique entre l'électrode et la pièce à souder dans un appareil de soudure à arc à courant alternatif du type gaz-tungstène ou gaz-métal, ou dans un appareil de soudure à arc à courant pulsatoire du type gaz-tungstène. Dans ce dernier cas, il convient de mentionner qu'il n'est pas nécessaire de moduler le courant puisqu'il existe une variation naturelle de celui-ci, dû aux impulsions. Il est par contre nécessaire de tenir compte du réglage manuel possible de la fréquence des impulsions ou de leur intensité. Pour ce faire, au lieu de simplement filtrer le signal acoustique capté, on intègre son amplitude à chaque impulsion et on divise le signal ainsi intégré par une valeur proportionnelle à l'amplitude de l'impulsion. Cette double opération d'intégration et de division permet avantageusement de tenir compte de toutes variations de la fréquence de l'impulsion ou de l'intensité de celle-ci quel que soit le réglage manuel effectué par l'opérateur.

Enfin, le procédé selon l'invention peut être utilisé pour contrôler la longueur de l'arc électrique existant entre l'électrode et la pièce à souder dans un appareil de soudure à arc à courant continu ou alternatif du type gaz-tungstène avec apport de métal au moyen d'un fil de métal. Dans ce dernier cas, simultanément au filtrage effectué à la fréquence fondamentale du signal acoustique, on détecte également à l'aide d'un détecteur à seuil électronique chacun des bruits généré par le métal apporté par le fil lorsqu'il tombe sous forme de gouttelettes sur la pièce à souder. On compare alors la fréquence des bruits ainsi détectés à une longueur de référence désirée ajustable correspondant à la projection d'un nombre donné de gouttelettes pour déterminer la valeur algébrique de cette différence et produire un signal électrique continu proportionnel à ladite valeur algébrique que l'on peut alors fournir à un dispositif d'asservissement pour déplacer le fil d'apport en métal par rapport à l'arc jusqu'à ce que la fréquence réelle de projection des gouttelettes de métal correspondent à la fréquence désirée.

Bien entendu, l'invention propose un dispositif général pour mettre en oeuvre le procédé selon l'invention, ainsi que des dispositifs spécialement adaptés à chacune des applications particulières précédemment mentionnées du procédé selon l'invention.

Les diverses possibilités d'utilisation du procédé selon l'invention ainsi que ses avantages ressortiront mieux de la lecture de la description non restrictive qui va suivre de plusieurs modes de réalisation préférés, de l'invention en référence aux dessins annexés correspondants, dans lesquels:

— la Fig. 1 est une vue schématique d'un four à arc à courant continu équipé d'un dispositif de contrôle de longueur d'arc selon l'invention;
— la Fig. 2 est une vue schématique d'un four à arc à courant triphasé dont la longueur de chacun des arcs est contrôlée à l'aide d'un dispositif de contrôle selon l'invention;
— la Fig. 3 est une vue schématique d'un appareil de soudure à arc à courant continu, du type gaz-tungstène avec support de métal au moyen d'un fil de métal, dont la longueur de l'arc et la vitesse du fil de métal sont contrôlées par un dispositif selon l'invention;
— la Fig. 4 est un bloc-diagramme schématique d'un circuit électrique de contrôle utilisable pour un four à arc à courant continu tel que celui illustré dans la Fig. 1;
— la Fig. 5 est un bloc-diagramme schématique d'un circuit électrique de contrôle utilisable pour un four à arc à courant triphasé tel qu'illustré à la Fig. 2;
— la Fig. 6 est un bloc-diagramme schématique d'un circuit électrique de contrôle utilisable pour un appareil de soudure à arc à courant pulsatoire; et
— la Fig. 7 est un bloc-diagramme schématique d'un circuit de contrôle utilisable pour un appareil de soudure à arc avec apport de métal tel qu'illustré à la Fig. 3.

Tel que cela a été précédemment indiqué, la présente invention est basée sur la constatation du fait que l'amplitude du signal acoustique généré par un arc électrique est fonction de la longueur de ce dernier et que, par conséquent, la longueur d'arc qui est un paramètre essentiel au bon fonctionnement de n'importe quelle machine à arc, peut être très facilement contrôlée par simple mesure de l'intensité du signal acoustique généré par l'arc pendant que la machine est en fonctionnement, et par utilisation de cette valeur mesurée pour asservir le déplacement d'au moins un des deux éléments entre lesquels l'arc est généré.

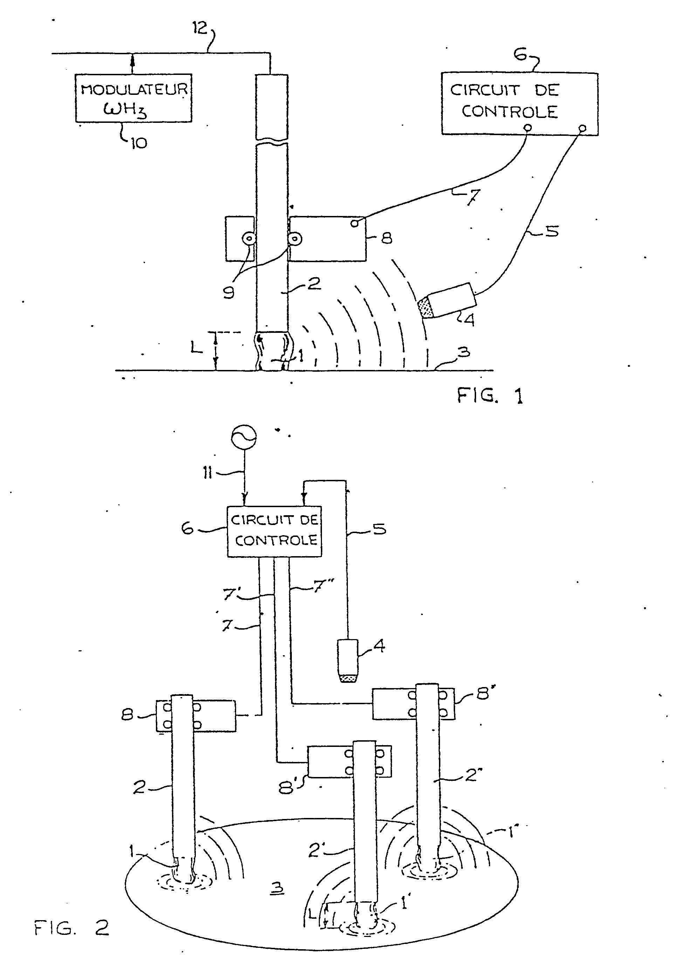

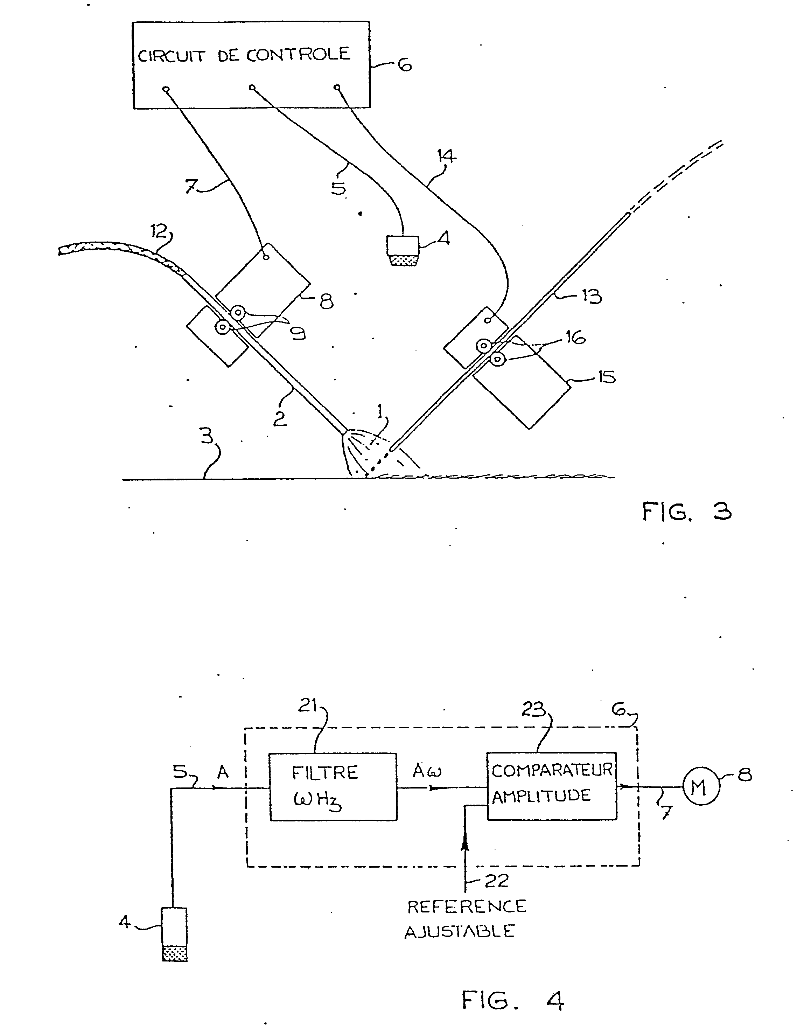

Le principe général sur lequel est basé le procédé selon l'invention peut être très facilement compris en se référant aux Figs. 1 et 4 qui représentent schématiquement un four à arc à courant continu équipé d'un dispositif de contrôle de longueur d'arc selon l'invention, ainsi qu'un exemple de circuit électrique utilisable pour ce contrôle.

Le four à arc illustré à la Fig. 1 comprend une électrode 2 disposée au dessus d'un bain liquide 3. L'électrode 2 ainsi que le bain 3 sont tous deux reliés aux bornes d'une source de courant continu dont l'intensité est telle qu'un arc électrique 1 de longueur L se forme entre l'extrémité inférieure de l'électrode 2 et la surface de bain 3. Pour mettre en oeuvre le procédé de contrôle selon l'invention, il est nécessaire de moduler le courant continu d'alimentation de l'arc à une fréquence donnée ω pour générer le signal acoustique, puisqu'il est connu qu'un arc électrique généré à l'aide d'un courant continu ne produit pas d'ondes sonores. Pour générer un signal acoustique, on utilise donc un modulateur 10 qui peut être monté sur le fil 12 d'alimentation de l'électrode 2 de façon à assurer une très faible modulation de courant à une fréquence ω et ainsi à permettre à l'arc 1 de générer un signal acoustique.

Selon l'invention, ce signal acoustique—représenté sur la Fig. 1 par des arcs de cercles concentriques en lignes pointillées—est capté à l'aide d'un microphone 4 ou tout autre détecteur acoustique approprié. Le signal ainsi capté est transmis via un fil 5 jusqu'à un circuit de contrôle 6 dont la structure est détaillée dans la Fig. 4. Le circuit de contrôle 6 comprend tout d'abord un filtre 21 pour filtrer le signal acoustique capté par le microphone 4 à sa fréquence fondamentale qui est égale à la valeur de la fréquence de modulation ω. Le circuit de contrôle 6 comprend également un comparateur d'amplitude 23 placé en aval du filtre 21 pour comparer l'amplitude A du signal acoustique filtré par le filtre 21 à une amplitude de référence ajustable 22 correspondant à une longueur d'arc désirée pour déterminer la valeur algébrique de leur différence et produire un signal électrique continu proportionnel à cette valeur algébrique. Ce comparateur d'amplitude 23 peut être, par exemple, un amplificateur différentiel recevant d'une part le signal venant du filtre 21 et d'autre part le signal de référence 22 dont l'amplitude peut être ajustée à l'aide d'une résistance variable étalonnée en fonction des diverses longueurs possibles et désirées pour l'arc 1. Le signal électrique continu qui est délivré par le comparateur 23 et qui est proportionnel à la valeur algébrique de la différence entre le signal sortant du filtre 21 et celui de référence 22, est alors transmis via un fil 7 à un dispositif d'asservissement 8 de l'électrode 2. Le dispositif 8 peut être constitué par un simple moteur à courant continu M entraînant des galets 9 pour déplacer l'électrode 2 verticalement dans l'une ou l'autre des directions possibles.

Comme on peut le comprendre, le dispositif d'asservissement 8 n'est alimenté par le circuit de contrôle 6 que lorsque le comparateur 23 émet un signal électrique ou, en d'autres termes, lorsque ce comparateur détecte une différence entre le signal sortant du filtre 21 et le signal de référence 22. Il est en effet bien évident que lorsque le signal en provenance du filtre 21 correspond au signal 22 qui lui même correspond à une longueur d'arc désirée le dispositif d'asservissement 8 ne fonctionne pas puisque la longueur L réelle de l'arc 1 correspond à la longueur désirée. Si par contre le dispositif d'asservissement 8 reçoit un signal positif ou négatif en provenance du circuit de contrôle 6, il déplace automatiquement l'électrode 2 proportionnellement à la valeur algébrique ainsi déterminée pour augmenter ou réduire la longueur réelle de l'arc selon le signal du signal reçu et ainsi augmenter ou réduire la longueur réelle de l'arc 1 jusqu'à ce qu'elle soit ramenée à la longueur L désirée. Bien entendu, ceci s'effectue automatiquement et l'on peut donc facilement comprendre que ce dispositif de contrôle est particulièrement bien approprié pour assurer une longueur d'arc sensiblement constante même dans le cas du four à arc où l'électrode 2 est consommée en cours de fonctionnement.

Il est à signaler qu'un dispositif de contrôle ayant une structure identique à celle précédemment décrite peut être utilisé pour contrôler la longueur de l'arc électrique entre l'électrode et la pièce à souder dans un appareil de soudure à arc à courant continu du type gaz-tungstène ou gaz-métal. En effect dans ce cas, il suffit là encore de moduler faiblement le courant de façon à générer un signal acoustique, de capter ce signal acoustique à l'aide d'un microphone à proximité de l'arc et d'asservir le déplacement de l'électrode de l'appareil de soudure en fonction de la valeur de la différence entre le signal acoustique filtré à sa fréquence de modulation et un signal de référence ajustable correspondant à une longueur d'arc désirée.

Le procédé de contrôle précédemment décrit de façon générale peut être très avantageusement utilisé dans le cas d'un four à arc à courant triphasé.

Tel qu'illustré schématiquement à la Fig. 2, un four à courant triphasé comprend trois électrodes 2, 2' et 2'' généralement en carbone, positionnées au dessus d'un bain liquide 3 qui agit comme neutre commun pour les trois arcs 1, 1' et 1'' créés entre les trois électrodes et le bain. Comme son nom l'indique, ce type de four est alimenté par un courant triphasé, et ce de façon telle que chaque électrode soit alimentée par une phase de courant. En supposant que la fréquence du courant triphasé d'alimentation est de 60 hertz, il en résulte que chaque arc 1, 1' ou 1'' génère un signal acoustique à 120 hertz dont la phase est décalée de 120° par rapport à la phase des signaux générés par les deux autres arcs électriques. L'existence de ce signal acoustique à la fréquence particulière de 120 hertz s'explique facilement en constant que pour chaque demi-période du courant alternatif, chaque arc électrique génère une onde de pression dont l'amplitude ne varie qu'avec la tension de l'arc ou sa longueur puisque l'amplitude du courant est par définition constante. Le signal acoustique correspondant a donc une fréquence correspondant à deux fois la fréquence du courant alternatif, et une amplitude qui, comme celle de l'onde de pression, ne varie qu'avec la tension entre les deux extrémités de l'arc ou la longueur de ce dernier.

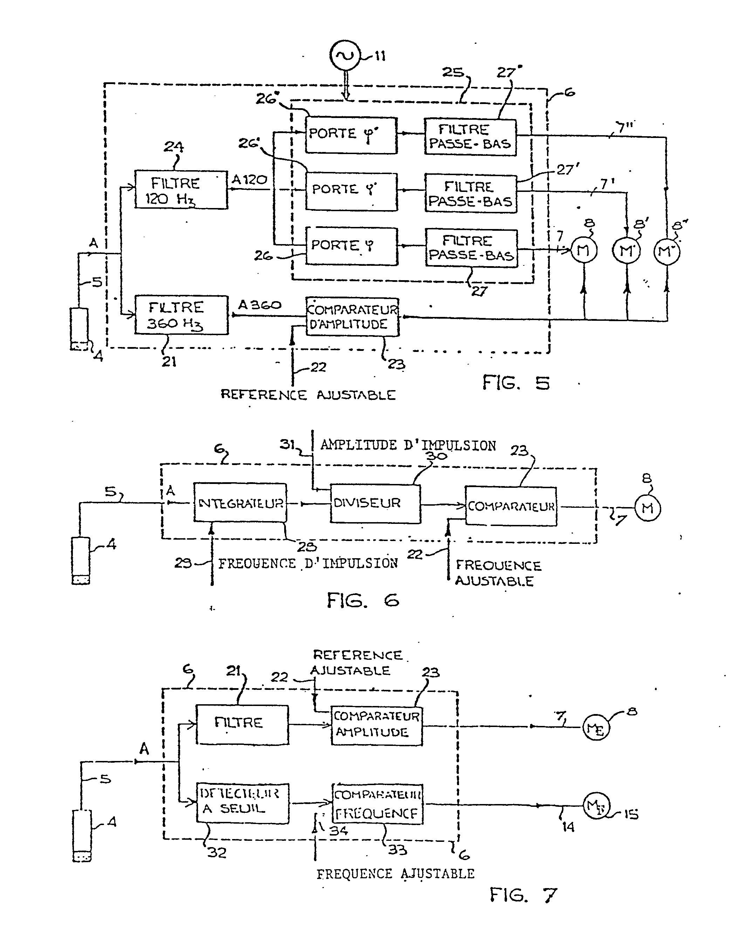

Pour réaliser un contrôle de la longueur de l'arc se formant entre chaque électrode et le bain 3, il est nécessaire de positionner un microphone 4 au dessus du bain sensiblement à égale distance des trois électrodes 2, 2' et 2''. Le signal acoustique capté par ce microphone est transmis via un fil 5 à un circuit de contrôle 6 montré à la Fig. 5 dans lequel il subit un filtrage à une fréquence de 120 hertz à travers un filtre 24. Si, comme il est normal, les longueurs des arcs 1, 1' et 1'' sont identiques, les trois composantes du signal acoustique capté à cette fréquence sont identiques et, étant toutes trois à 120° les unes par rapport aux autres, leur somme est nulle. Au cas où le signal filtré à 120 hertz dans le filtre 24 n'est pas nul, ceci signifie qu'au moins l'un des arcs n'a pas la même longueur que les autres. De plus, le signal acoustique étant fonction de la longueur de l'arc, il est évident que plus la composante du signal acoustique à 120 hertz est grande, plus la différence entre les longueurs des arcs est grande.

Pour déterminer lequel (ou lesquels) des arcs est (ou sont) de longueur(s) différente(s) des austres, le signal filtré à 120 hertz par le filtre 24 est appliqué à un comparateur de phase 25 comprenant trois portes 26, 26' et 26'' pour comparer la phase du signal acoustique filtrée à 120 hertz à chacune des phases φ, φ', φ'' du courant triphasé 11, pour déterminer la valeur algébrique de la différence de phase du signal filtré par rapport à chacune des phases du courant triphasé et pour séparément produire à l'aide de trois filtres 27, 27' et 27'' trois signaux électriques continus et distincts qui sont fonction des valeurs algébriques des différences entre la phase du signal filtré et des phases du courant triphasé respectivement. Si, par exemple, l'arc 1 généré entre l'électrode 2 et le bain 3 est trop court, la composante à 120 hertz en phase avec l'électrode 2 diminuera et le filtre 24 délivrera un signal proportionnel à cette variation de longueur dont la phase sera décalée de 180° par rapport à la phase de l'électrode 2. Ce signal décalé en phase est fourni aux portes 26, 26' et 26'' qui délivrent chacune un signal redressé par le filtre 27, 27' et 27'' respectivement. En supposant, comme précédemment, que la longueur de l'arc 1 entre l'électrode 2 et le bain 3 est trop courte, le signal continu transmis par le filtre 27 sera négatif tandis que les signaux transmis par les filtres 27' et 27'' seront positifs. Les trois signaux positifs et négatifs ainsi produits par le comparateur de phase 25 seront alors transmis séparément par des fils 7, 7' et 7'' à trois dispositifs d'asservissement 8, 8' et 8'' indépendants les uns des autres mais associés respectivement aux trois électrodes 2, 2' et 2'' du four.

Comme on peut facilement le comprendre maintenant, dès que la longueur de l'arc généré entre une électrode alimentée par une phase donnée et le bain sera différente de la longueur des autres arcs, le signal acoustique filtré, à 120 hertz agira automatiquement via le comparateur de phase 25, sur les trois dispositifs d'asservissement 8, 8' et 8'' de façon à déplacer séparément les électrodes les unes par rapport aux autres jusqu'à ce que les longueurs de leurs arcs redeviennent égales entre elles.

Pour assurer maintenant un contrôle de la longueur commune désirée pour les trois arcs 1, 1' et 1'' du four à arc illustré à la Fig. 2, on filtre le signal acoustique capté par le microphone 4 à sa fréquence fondamentale qui, si les trois arcs ont la même longueur, est égale à six fois la fréquence du courant triphasé, soit 360 hertz. A cette fréquence en effet, le signal capté est égal à la somme des trois signaux acoustiques générés par les arcs créés entre les trois électrodes 2, 2' et 2'' et le bain 3.

En se référant à nouveau à la Fig. 5, on filtre donc le signal acoustique capté par le microphone 4 à la fréquence de 360 hertz à l'aide d'un filtre 21 et l'on transmet le signal ainsi filtré à un comparateur d'amplitude 23 dans lequel l'amplitude du signal acoustique ainsi filtré à 360 hertz est comparée à une amplitude de référence 22 qui correspond à une longueur désirée pour les trois arcs du four. Le comparateur d'amplitude 23 détermine la valeur algébrique de la différence entre le signal filtré à 360 hertz par le filtre 21 et le signal de référence 22 et produit un signal électrique continu proportionnel à cette valeur algébrique. Ce signal électrique continu est alors fourni simultanément aux trois dispositifs d'asservissement 8, 8' et 8'' des trois électrodes 2, 2' et 2'' pour déplacer celles-ci toutes ensemble par rapport au bain jusqu'à ce que la longueur réelle commune de leur arc soit ramenée à la valeur désirée.

Comme on peut donc le constater, le dispositif selon l'invention permet de contrôler de façon extrêmement simple non seulement la longueur commune des trois arcs du four de façon à ce que cette longueur commune corresponde à une longueur désirée, mais également de corriger automatiquement la longueur de chaque arc par rapport aux autres, ce qui apparemment n'a jamais été fait jusqu'à présent. De plus, le procédé selon l'invention permet de détecter immédiatement si un arc se forme avec les parois du four plutôt qu'avec le bain dans le cas par exemple d'une usure du réfractaire, puisque, dans ce cas, le signal acoustique variera de façon substantielle et amènera immédiatement le dispositif de contrôle à corriger les longueurs des arcs.

Comme il a été précédemment indiqué, le procédé selon l'invention ne s'applique pas seulement au four à arc mais également à n'importe quel type d'appareil de soudure, pour contrôler la longueur de l'arc électrique entre l'électrode et la pièce à souder.

Ainsi, le procédé selon l'invention peut être utilisé dans un appareil de soudure à arc à courant continu ou alternatif, du type gaz-tungstène, à la place du système de contrôle de tension actuel connu sous le sigle AVC (en anglais "arc voltage control"). Bien entendu, dans le cas où le courant d'alimentation est continu, il sera nécessaire de moduler faiblement le courant de façon à générer un signal acoustique et de filtrer le signal acoustique capté à la fréquence de modulation avant de comparer son amplitude à une amplitude de référence ajustable correspondant à une longueur d'arc désirée. Dans le cas où le courant est alternatif, le signal acoustique généré naturellement par l'arc devra être filtré à deux fois la valeur de la fréquence du courant avant de comparer son amplitude à l'amplitude d'une référence ajustable correspondant à une longueur d'arc désirée. Dans l'un et l'autre cas, la sensibilité du contrôle selon l'invention est très nettement améliorée, puisque le signal acoustique n'est proportionnel qu'à la longueur de l'arc et donc à la chute de tension dans cet arc, et ne tient absolument pas compte des chutes de tension aux électrodes comme c'est le cas pour les systèmes de contrôle de tension existants.

De même, pour les appareils de soudure à arc du type gaz-métal, le procédé selon l'invention permet d'améliorer le contrôle de la longueur de l'arc et par conséquent la qualité de la soudure, et ce de façon indépendante du mode de dépôt du métal ou du choix de la source d'alimentation qui peut être en pratique à tension constante ou à courant constant.

Le procédé selon l'invention peut également être utilisé pour contrôler la longueur de l'arc électrique entre l'électrode et la pièce à souder dans un appareil de soudure à arc à courant pulsatoire du type gaz-tungstène. Dans ce cas, le fait de pourvoir utiliser le procédé selon l'invention est un très net progrès par rapport à l'état de la technique puisque les systèmes de contrôle de tension AVC ne peuvent pas être utilisés avec ce genre d'appareil dont la fréquence et l'intensité du courant pulsatoire est habituellement réglable.

Pour appliquer le procédé selon l'invention à un tel type d'appareil de soudure à courant pulsatoire, il n'est pas nécessaire de moduler le courant pour générer un signal acoustique puisqu'il existe une variation naturelle de ce courant du fait des impulsions et qu'il y a par conséquent génération d'un signal acoustique par l'arc. Toutefois, étant donné que la fréquence et l'intensité du courant pulsatoire est et doit être réglable, on ne peut utiliser le système simple décrit précédemment pour les appareils de soudure du type gaz-métal ou gaz-tungstène.

En effet pour pouvoir tenir compte de ce réglage possible des impulsions, on est obligé d'utiliser un circuit 6 différent de ceux précédemment décrits. Le circuit différent 6 est illustré à la Fig. 6.

Dans ce circuit, le signal acoustique capté par le microphone 4 est fourni à un intégrateur 28 pourvu d'un dispositif automatique de remise à 0 asservi au dispositif de contrôle de la fréquence des impulsions 29. L'intégrateur 28 intègre l'amplitude du signal acoustique capté pour chaque impulsion et transmet cette valeur intégrée à un diviseur 30 qui divise le signal ainsi intégré par une valeur proportionnelle à l'amplitude d'impulsion 31 dont l'intensité est également réglable par l'opérateur de l'appareil. Cette double opération d'intégration et de division asservie à la fréquence ainsi qu'à l'amplitude réglable des impulsions permet d'obtenir un signal intégré puis divisé qui est indépendant du réglage des impulsions et peut être alors comparé à une amplitude de référence ajustable correspondant à une longueur d'arc désirée 22 à l'aide d'un comparateur 23 pour déterminer la valeur algébrique de leur différence et produire un signal électrique continu proportionnel à cette valeur algébrique qui est fournie via un fil 7 à un dispositif d'asservissement 8 pour déplacer l'électrode de l'appareil par rapport à la pièce à souder jusqu'à ce que la longueur de l'arc soit ramenée à sa valeur désirée.

Enfin, le procédé selon l'invention peut être avantageusement utilisé pour contrôler la longueur de l'arc électrique existant entre l'électrode et la pièce à souder dans un appareil de soudure à arc à courant continu ou alternatif, du type gaz-tungstène avec apport de métal au moyen d'un fil.

Dans ce cas, comme dans les cas précédemment mentionnés, il est nécessaire de moduler faiblement le courant si celui-ci est continu.

Un appareil de soudure de ce type est illustré à la Fig. 3 est son circuit électrique de contrôle à la Fig. 7.

Comme on peut le constater, ce genre d'appareil comprend une électrode 2 disposée à proximité de la pièce à souder 3 de façon à ce qu'un arc électrique 1 puisse être créé entre celle-ci, et un fil 13 fondant en gouttelettes sous la chaleur de l'arc pour apporter le métal nécessaire à la soudure désirée sur la pièce 3.

Pour obtenir le contrôle acoustique désiré selon l'invention, l'appareil comprend en outre un microphone 4 relié par un fil 5 à un circuit de contrôle 6 dont la structure est illustrée en détail à la Fig. 7. Ce circuit de contrôle comporte, comme pour tous les modes de réalisation précédentes, un filtre 21 pour filtrer le signal acoustique capté à sa fréquence fondamentale qui est égale à la valeur de la fréquence de modulation dans le cas où l'arc est à courant continu, et à deux fois la valeur de la fréquence du courant dans le cas où l'arc est à courant alternatif. Le circuit 6 comprend également un comparateur 23 pour comparer l'amplitude du signal acoustique filtré à une amplitude de référence ajustable 22 qui correspond à la longueur d'arc désirée pour déterminer la valeur algébrique de leur différence et produire un signal électrique continu proportionnel à cette valeur algébrique. Le signal électrique continu ainsi produit est fourni via un fil 7 à un dispositif d'asservissement 8 comprenant un moteur $M_E$ entraînant des galets 9 pour déplacer l'électrode 2 par rapport à la pièce à souder 3 jusqu'à ce que la longueur réelle de l'arc 1 soit ramenée à sa valeur désirée.

Simultanément aux opérations qui précèdent, on détecte également à l'aide d'un détecteur à seuil électronique 32 relié au microphone 4 chacun des bruits générés par le métal apporté par le fil 13 lorsqu'il tombe sous forme de gouttelettes sur la pièce à souder 3. On compare alors dans un comparateur 33 la fréquence des bruits ou chocs des gouttelettes ainsi détectés à une fréquence de référence ajustable 34 correspondant à la projection d'un nombre donné de gouttelettes pour déterminer la valeur algébrique de leur différence et produire un signal électrique continu proportionnel à cette valeur algébrique de la différence de fréquences de projection des gouttelettes. Le signal électrique continu produit par le comparateur de fréquence 33 est alors fourni via un fil 14 à un dispositif d'asservissement 15 comprenant un moteur à courant continu $M_F$ entraînant des galets 16 de façon à déplacer le fil d'apport en métal par rapport à l'arc jusqu'à ce que la fréquence réelle de projection des gouttelettes de métal corresponde à la fréquence désirée.

Comme on peut le constater, la captation acoustique selon l'invention permet le contrôle non seulement de la longueur de l'arc mais également du mode de dépôt du métal d'apport. En effet, la fréquence de production des gouttelettes se formant à l'extrémité du fil de métal d'apport varie suivant les conditions et produit un bruit à une fréquence que l'on peut utiliser pour ajuster l'alimentation du fil.

**Revendications**

1. Procédé pour contrôler la longueur d'un arc électrique (1) entre deux éléments (2, 3) dans une machine à arc, en détectant des sons de l'axe, caractérisé en ce qu'il comprend les étapes suivantes:

— on module le courant d'alimentation de l'arc s'il ne l'est déjà, pour générer un signal acoustique;
— on capte le signal acoustique généré par l'arc (1);
— on compare l'amplitude du signal acoustique capté qui, en pratique, est une fonction directe de la longueur réelle de l'arc (1), à une amplitude de référence (22) correspondant à une longueur d'arc désirée pour déterminer la valeur algébrique de leur différence; et
— on asservit le déplacement d'aù moins l'un (2) des deux éléments de la machine à arc proportionnellement à la valeur algébrique déterminée pour augmenter ou réduire la longueur réelle (L) de l'arc (1) et ainsi ramener ladite longueur réelle à la longueur désirée.

2. Procédé selon la revendication 1 pour contrôler la longueur d'un arc électrique (1) entre l'électrode (2) et le bain (3) dans un four à arc à courant continu (Figs. 1, 4), caractérisé en ce que:

— on module le courant continu de l'alimentation de l'arc (1) pour générer un signal acoustique;
— on capte le signal acoustique généré;
— on filtre le signal acoustique capté à sa fréquence fondamentale $(\omega)$ qui est égale à la valeur de la fréquence de modulation;
— on compare l'amplitude du signal acoustique filtré (A) à une amplitude de référence ajustable (22) correspondant à une longueur d'arc désirée pour déterminer la valeur algébrique de leur différence et produire un signal électrique continu (7) proportionnel à ladite valeur algébrique; et
— on fournit le signal électrique continu produit (7) à un dispositif d'asservissement (8) pour déplacer l'électrode (2) par rapport au bain (3) jusqu'à ce que la longueur réelle de l'arc (1) soit ramenée à la longueur désirée.

3. Procédé selon la revendication 1 pour contrôler simultanément la longueur respective des arcs électriques (1, 1', 1'') entre les trois électrodes (2, 2', 2'') et le bain (3) d'un four à arc à courant triphasé (Figs. 2, 5), caractérisé en ce que:

— on capte le signal acoustique généré naturellement par le four à égale distance des trois électrodes (2, 2', 2'');
— on filtre le signal acoustique ainsi capté à une première fréquence (360 Hz) égale à six fois la valeur de la fréquence (60 Hz) du courant triphasé (11);
— on compare l'amplitude du signal acoustique filtré (A) à ladite première fréquence (360 Hz), à une amplitude de référence ajustable (22) qui correspond à une longueur d'arc désirée pour déterminer la valeur algébrique de leur différence et produire un signal électrique continu proportionnel à ladite valeur algébrique; et
— on fournit simultanément le signal électrique continu produit à trois dispositifs d'asservissement indépendants (8, 8', 8'') associés respectivement aux trois électrodes (2, 2', 2'') pour déplacer simultanément celles-ci toutes les trois ensemble par rapport au bain (3) jusqu'à ce que la longueur réelle commune de leurs arcs (1, 1', 1'') soit ramenée à la longueur désirée.

4. Procédé selon la revendication 3, caractérisé en ce qu'il comprend les étapes additionnelles suivantes:

— simultanément au premier filtrage, on filtre le signal acoustique capté à une seconde fréquence (120 Hz) égale à deux fois la valeur de la fréquence (60 Hz) du courant triphasé (11);
— on compare la phase du signal filtré à ladite seconde fréquence (120 Hz) à chacune des phases du courant triphasé pour déterminer la valeur algébrique de la différence de phase du signal filtré par rapport à chacune des phases (φ, φ′, φ″) du courant triphasé et séparément produire trois signaux électriques continus et distincts qui sont fonction des valuers algébriques respectives de la différence entre la phase du signal filtré et chacune des phases du courant triphasé (11); et
— on fournit les signaux électriques produits séparément aux trois dispositifs d'asservissement (8, 8′, 8″) associés respectivement aux trois électrodes (2, 2′, 2″) du four de façon à ce que l'électrode alimentée par une phase donnée soit asservie au signal électrique produit pour la même phase et soit déplacée séparément des autres électrodes par rapport au bain (3) jusqu'à ce que la longueur de son arc redevienne égale à la longueur des arcs des deux autres électrodes et par conséquent à la longueur commune désirée pour les trois arcs (1, 1′, 1″).

5. Procédé selon la revendication 1 pour contrôler la longueur de l'arc électrique (1) entre l'électrode (2) et la pièce à souder (3) dans un appareil (Figs. 3, 7) de soudure à arc à courant continu ou alternatif du type gaz-tungstène ou gaz-métal, caractérisé en ce que:

— dans le cas d'un arc à courant continu, un module le courant d'alimentation de l'arc pour générer un signal acoustique;
— on capte le signal acoustique généré;
— on filtre le signal acoustique capté à sa fréquence fondamentale qui est égale à la valeur de la fréquence de modulation dans le cas où l'arc est à courant continu, et à deux fois la valeur de la fréquence du courant dans le cas où l'arc est à courant alternatif;
— on compare l'amplitude du signal acoustique filtré à une amplitude de référence ajustable (22) qui correspond à la longueur d'arc désirée pour déterminer la valeur algébrique de leur différence et produire un signal électrique continu (7) proportionnel à l'adite valeur algébrique; et
— on fournit le signal électrique produit (7) à un dispositif d'asservissement (8) pour déplacer l'électrode (2) par rapport à la pièce à souder (3) jusqu'à ce que la longueur réelle de l'arc (1) soit ramenée à la longueur désirée.

6. Procédé selon la revendication 1 pour contrôler la longueur de l'arc électrique (1) entre l'électrode (2) et la pièce à souder (3) dans un appareil de soudure à arc à courant pulsatoire du type gaz-tungstène (Fig. 6), caractérisé en ce que:

— on capte le signal acoustique généré naturellement par l'appareil de soudure du fait des impulsions du courant;
— on intègre l'amplitude (A) du signal capté à chaque impulsion;
— on divise le signal intégré par une valeur (31) proportionnelle à l'amplitude de l'impulsion;
— on compare l'amplitude du signal intégré ainsi divisé à une amplitude de référence ajustable (22) qui correspond à une longueur d'arc désirée pour déterminer la valeur algébrique de leur différence et produire un signal électrique continu (7) proportionnel à ladite valeur algébrique; et
— on fournit le signal électrique continu produit (7) à un dispositif d'asservissement (8) pour déplacer l'électrode (2) par rapport à la pièce à souder (3) jusqu'à ce que la longueur de l'arc (1) soit ramenée à la longueur désirée.

7. Procédé selon la revendication 1 pour contrôler la longueur de l'arc électrique (1) entre l'électrode (2) et la pièce à souder (3) dans un appareil (Figs. 3, 7) de soudure à arc à courant continu ou alternatif du type gaz-tungstène avec apport de métal au moyen d'un fil de métal (13), caractérisé en ce que:

— dans le cas où l'arc est à courant continu, on module le courant d'alimentation de l'arc, pour générer un signal acoustique;
— on capte le signal acoustique généré par l'arc;
— on filtre le signal acoustique ainsi capté à sa fréquence fondamentale qui est égale à la valeur de la fréquence de modulation dans le cas où l'arc est à courant continu, et à deux fois la valeur de la fréquence du courant dans le cas où l'arc est à courant alternatif;
— on compare l'amplitude du signal acoustique filtré à une amplitude de référence ajustable (22) qui correspond à la longueur d'arc désirée pour déterminer la valeur algébrique.de leur différence et produire un signal électrique continu (7) proportionnel à ladite valeur algébrique;
— on fournit le signal électrique continu produit (7) à un dispositif d'asservissement (8) pour déplacer l'électrode (2) par rapport à la pièce à souder (3) jusqu'à ce que la longueur réelle de l'arc (1) soit ramenée à la longueur désirée;
— simultanément au filtrage (21) effectué à la fréquence fondamentale du signal acoustique, on détecte également à l'aide d'un seuil électronique (32) chacun des bruits générés par le métal apporté par la fil (13) lorsqu'il tombe sous forme de gouttelettes sur la pièce à souder (3);
— on compare la fréquence des bruits détectés à une fréquence de référence désirée ajustable (34) correspondant à la projection d'un nombre donné de gouttelettes pour déterminer la valeur algébrique de cette différence et produire un signal électrique continu (14) proportionnel à ladite valeur algébrique de la différence de fréquences de projection des gouttelettes; et

— on fournit le signal électrique continu produit précédemment (14) à un dispositif d'asservissement (15) pour déplacer le fil d'apport en métal (13) par rapport à l'arc (1) jusqu'à ce que la fréquence réelle de projection des gouttelettes de métal corresponde à la fréquence désirée.

8. Dispositif de contrôle de la longueur d'un arc électrique (1) entre deux éléments (2, 3) pour la mise en oeuvre du procédé conforme à l'une des revendications 1 à 7, caractérisé en ce qu'il comprend:

— des moyens (10) pour moduler le courant d'alimentation de l'arc s'il ne l'est pas déjà pour générer un signal acoustique;
— des moyens (4) pour capter le signal acoustique généré par l'arc;
— des moyens (23) pour comparer l'amplitude du signal acoustique capté qui, en pratique, est une fonction directe de la longueur réelle de l'arc, à une amplitude de référence (22) correspondant à une longueur d'arc désirée pour déterminer la valeur algébrique de leur différence; et
— des moyens (8) asservis à la valeur algébrique déterminée pour déplacer au moins l'un (2) des deux éléments de la machine à arc proportionnellement à la valeur algébrique déterminée de façon à augmenter ou réduire la longueur réelle de l'arc et ainsi ramener ladite longueur réelle à la longueur désirée.

9. Dispositif selon la revendication 8 pour contrôler la longueur d'un arc électrique (1) entre l'électrode (2) et le bain (3) dans un four à arc à courant continu (Figs. 1, 4), caractérisé en ce qu'il comprend:

— des moyens (10) pour moduler le courant continu d'alimentation de l'arc (1) de façon à générer un signal acoustique;
— des moyens (4) pour capter le signal acoustique généré;
— des moyens (21) pour filtrer le signal acoustique capté à sa fréquence fondamentale (ω) qui est égale à la valeur de fréquence de modulation;
— des moyens (23) pour comparer l'amplitude du signal acoustique filtré (A) à une amplitude de référence ajustable (22) correspondant à une longueur d'arc désirée pour déterminer la valeur algébrique de leur différence et produire un signal électrique continu (7) proportionnel à ladite valeur algébrique, et
— des moyens (8) asservis au signal électrique continu produit (7) pour déplacer l'électrode (2) par rapport au bain (3) jusqu'à ce que la longueur réelle de l'arc (1) soit ramenée à la longueur désirée.

10. Dispositif selon la revendication 8 pour contrôler simultanément la longueur respectives des arcs électriques (1, 1', 1'') entre les trois électrodes (2, 2', 2'') et le bain (3) d'un four à arc à courant triphasé (Figs. 2, 5), caractérisé en ce qu'il comprend:

— des moyens (4) pour capter le signal acoustique généré naturellement par le four à égale distance des trois électrodes (2, 2', 2'');
— des moyens (21) pour filtrer le signal acoustique ainsi capté à une première fréquence (360 Hz) égale à six fois la valeur de la fréquence (60 Hz) du courant triphasé (11);
— des moyens (23) pour comparer l'amplitude du signal acoustique filtré (A) à ladite première fréquence (360 Hz), à une amplitude de référence ajustable (22) qui correspond à une longueur d'arc désirée pour déterminer la valeur algébrique de leur différence et produire un signal électrique continu proportionnel à ladite valeur algébrique; et
— trois dispositifs indépendants (8, 8', 8'') asservis chacun un signal électrique continu produit et associés respectivement aux trois électrodes (2, 2', 2'') pour simultanément déplacer celles-ci toutes ensemble par rapport au bain (3) jusqu'à ce que la longueur réelle commune de leurs arcs (1, 1', 1'') soit ramenée à la longueur désirée.

11. Dispositif selon la revendication 10, caractérisé en ce qu'il comprend en outre:

— des moyens (24) pour filtrer le signal acoustique capté à une seconde fréquence égale (120 Hz) à deux fois la valeur de la fréquence (60 Hz) du courant triphasé (11);
— des moyens (26, 26', 26'') pour comparer la phase du signal filtré à ladite seconde fréquence (120 Hz) à chacune des phases du courant triphasé pour déterminer la valeur algébrique de la différence de phase du signal filtré par rapport à chacune des phases ($\varphi$; $\varphi'$, $\varphi''$) du courant triphasé et produire trois signaux électriques continus et distincts qui sont fonction des valeurs algébriques respectives de la différence entre la phase du signal filtré et chacune des phases du courant triphasé (11); et
— des moyens (27, 27', 27'') pour fournir les trois signaux électriques produits séparément aux trois dispositifs de déplacement (8, 8', 8'') des électrodes (2, 2', 2'') de façon à ce que l'électrode alimentée par une phase donnée soit asservie au signal électrique produit pour la même phase et soit déplacée séparément des autres électrodes par rapport au bain (3) jusqu'à ce que la longueur de son arc redevienne égale à la longueur des deux autres électrodes et par conséquent à la longueur commune désirée pour les trois arcs (1, 1', 1'').

12. Dispositif selon la revendication 8 pour contrôler la longueur de l'arc électrique (1) entre l'électrode (2) et la pièce à souder (3) dans un appareil (Figs. 3, 7) de soudure à arc du type gaz-tungstène ou gaz-métal, caractérisé en ce qu'il comprend:

— des moyens (10) pour moduler le courant d'alimentation de l'arc s'il ne l'est pas déjà de façon à générer un signal acoustique;
— des moyens (4) pour capter le signal acoustique généré;
— des moyens (21) pour filtrer le signal acoustique capté à sa fréquence fondamentale égale à la valeur de la fréquence de modulation;
— des moyens (23) pour comparer l'amplitude du signal acoustique filtré à une amplitude de référence ajustable (22) qui correspond à la longueur d'arc désirée pour déterminer la valeur algébrique de leur différence et produire un signal électrique continu (7) proportionnel à ladite valeur algébrique; et
— des moyens (8) asservis au signal électrique produit (7) pour déplacer l'électrode (2) par rapport à la pièce à souder (3) jusqu'à ce que la longueur réelle de l'arc (1) soit ramenée à la longueur désirée.

13. Dispositif selon la revendication 8 pour contrôler la longueur de l'arc électrique (1) entre l'électrode (2) et la pièce à souder (3) dans un appareil à soudure à arc à courant pulsatoire du type gaz-tungstène (Fig. 6), caractérisé en ce qu'il comprend:

— des moyens (4) pour capter le signal acoustique généré naturellement par l'appareil de soudure du fait des impulsions du courant;
— des moyens (28) pour intégrer l'amplitude (A) du signal transmis à chaque impulsion, lesdits moyens d'intégration se remettant à 0 après chaque impulsion;
— des moyens (30) pour diviser le signal intégré par une valeur (31) proportionnelle à l'amplitude de l'impulsion;
— des moyens (23) pour comparer l'amplitude du signal intégré ainsi divisé à une amplitude de référence ajustable (22) qui correspond à une longueur d'arc désirée pour déterminer la valeur algébrique de leur différence et produire un signal électrique (7) proportionnel à ladite valeur algébrique; et
— des moyens (8) asservis au signal électrique continu produit (7) pour déplacer l'électrode (2) par rapport à la pièce à souder (3) jusqu'à ce que la longueur réelle de l'arc (1) soit ramenée à la longueur désirée.

14. Dispositif selon la revendication 8 pour contrôler la longueur de l'arc électrique (1) entre l'électrode (2) et la pièce à souder (3) dans un appareil (Figs. 3, 7) de soudure à arc à courant continu ou alternatif du type gaz-tungstène avec apport de métal au moyen d'un fil de métal (13), caractérisé en ce qu'il comprend:

— dans le cas où l'arc est à courant continu, des moyens (10) pour moduler le courant d'alimentation de l'arc pour générer un signal acoustique;
— des moyens (4) pour capter le signal acoustique généré par l'arc;
— des moyens (21) pour filtrer le signal acoustique capté à sa fréquence fondamentale qui est égale à la valeur de la fréquence de modulation dans le cas où l'arc est à courant continu et à deux fois la valeur de la fréquence du courant dans le cas où l'arc est à courant alternatif;
— des moyens (23) pour comparer l'amplitude du signal acoustique filtré à une amplitude de référence ajustable (22) qui correspond à la longueur d'arc désirée pour déterminer la valeur algébrique de leur différence et produire un signal électrique continu (7) proportionnel à ladite valeur algébrique;
— des premiers moyens (8) asservis au signal électrique continu produit (7) pour déplacer l'électrode (2) par rapport à la pièce à souder (3) jusqu'à ce que la longueur réelle de l'arc (1) soit ramenée à la longueur désirée;
— des moyens à seuil (32) pour détecter chacun des bruits générés par le métal apporté par le fil (13) lorsqu'il tombe sous forme de gouttelettes sur la pièce à souder (3);
— des moyens (33) de comparaison de la fréquence des bruits détectés à une fréquence de référence désirée ajustable (34) correspondant à la projection d'un nombre donné de gouttelettes, pour déterminer la valeur algébrique de cette différence et produire un signal électrique continu (14) proportionnel à ladite valeur algébrique de la différence de fréquences de projection des gouttelettes; et
— des seconds moyens (15) asservis au signal électrique continu produit précédemment (14) pour déplacer le fil d'apport en métal (13) par rapport à l'arc (1) jusqu'à ce que la fréquence réelle de projection des gouttelettes de métal corresponde à la fréquence désirée.

**Patentansprüche**

1. Verfahren zum Regeln der Länge eines Lichtbogens (1) zwischen zwei Elementen (2, 3) in einer Lichtbogenmaschine wobei die Geräusche des Lichtbogens aufgenommen werden, dadurch gekennzeichnet, daß es folgende Schritte enthält:

— man moduliert den Speisestrom des Lichtbogens (1), sofern er nicht bereits moduliert ist, um ein akustisches Signal zu erzeugen;
— man nimmt das vom Lichtbogen (1) erzeugte akustische Signal auf;
— man vergleicht die Amplitude des aufgenommenen akustischen Signals, die praktisch eine direkte Funktion der tatsächlichen Länge des Lichtbogens (1) ist, mit einer Referenzamplitude (22), die einer gewünschten Lichtbogenlänge entspricht, um den algebraischen Wert ihrer Differenz festzustellen; und
— man steuert die Verstellung von mindestens dem einen (2) der beiden Elemente der Lichtbogenmaschine proportional zum festgestellten algebraischen Wert, um die tatsächliche Länge (L.) des Lichtbogens (1) zu vergrößern oder zu verkleinern und somit die tatsächliche Länge auf die gewünschte Länge zu bringen.

2. Verfahren nach Anspruch 1 zum Regeln der Länge eines Lichtbogens (1) zwischen einer Elektrode (2) und dem Bad in einem Gleichstrom-Lichtbogenofen (Figuren 1, 4), gekennzeichnet durch die Schritte:

— man moduliert den Versorgungs-Gleichstrom des Lichtbogens (1), um ein akustisches Signal zu erzeugen;
— man nimmt das erzeugte akustische Signal auf;
— man filtert das aufgenommene akustische Signal bei seiner Grundfrequenz ($\omega$), die dem Wert der Modulationsfrequenz gleich ist;
— man vergleicht die Amplitude des gefilterten akustischen Signals (A) mit einer einstellbaren Referenzamplitude (22), die einer gewünschten Lichtbogenlänge entspricht, um den algebraischen Wert ihrer Differenz festzustellen und ein dem algebraischen Wert proportionales elektrisches Dauersignal (7) zu erzeugen; und
— man gibt das erzeugte elektrische Dauersignal (7) auf eine Steuervorrichtung (8), um die Elektrode (2) gegenüber dem Bad (3) zu verstellen, bis die tatsächliche Länge des Lichtbogens (1) auf die gewünschte Länge gebracht ist.

3. Verfahren nach Anspruch 1 zum gleichzeitigen Regeln der jeweiligen Länge von Lichtbogen (1, 1', 1'') zwischen den drei Elektroden (2, 2', 2'') und dem Bad (3) eines Dreiphasen-Drehstrom-Lichtbogenofens (Figuren 2, 5) gekennzeichnet durch die Schritte:

— man nimmt in gleichem Abstand von den drei Elektroden (2, 2', 2'') das vom Ofen natürlicherweise erzeugte Geräusch auf;
— man filtert das so aufgenommene akustische Signal bei einer ersten Frequenz (360 Hz), welche gleich dem sechsfachen Wert der Frequenz (60 Hz) des dreiphasigen Stromes (11) ist;
— man vergleicht die Amplitude des bei der ersten Frequenz (360 Hz) gefilterten akustischen Signals (A) mit einer einstellbaren Referenzamplitude (22), die einer gewünschten Lichtbogenlänge entspricht, um den algebraischen Wert ihrer Differenz festzustellen und ein dem algebraischen Wert proportionales Dauersignal zu erzeugen; und
— man gibt das erzeugte elektrische Dauersignal gleichzeitig an drei voneinander unabhängige Steuervorrichtungen (8, 8', 8''), welche jeweils einer der drei Elektroden (2, 2', 2'') zugeordnet sind, um diese gleichzeitig alle drei gemeinsam gegenüber dem Bad zu verstellen, bis die gemeinsame tatsächliche Länge ihrer Lichtbogen (1, 1', 1'') auf die gewünschte Länge gebracht ist.

4. Verfahren nach Anspruch 3, dadurch gekennzeichnet, daß es folgende zusätzliche Schritte enthält:

— gleichzeitig zur ersten Filterung filtert man das aufgenommene akustische Signal bei einer zweiten Frequenz (120 Hz), welche gleich dem doppelten Wert der Frequenz (60) Hz) des dreiphasigen Stromes (11) ist;
— man vergleicht die Phase des bei der zweiten Frequenz (120 Hz) gefilterten Signals mit einer jeden Phase des dreiphasigen Stromes, um den Wert der algebraischen Differenz der Phase des gefilterten Signals in Bezug auf jede der Phasen ($\varphi$, $\varphi'$, $\varphi''$) des dreiphasigen Stromes festzustellen und getrennt drei unterschiedliche elektrische Dauersignale zu erzeugen, welche eine Funktion der jeweiligen algebraischen Werte der Differenz zwischen der Phase des gefilterten Signals und jeder der Phasen des dreiphasigen Stromes (11) sind; und
— man gibt die getrennt erzeugten elektrischen Signale an drei Steuervorrichtungen (8, 8', 8''), welche jeweils einer der drei Elektroden (2, 2', 2'') des Ofens zugeordnet sind, in der Weise, daß die von einer bestimmten Phase versorgte Elektrode von dem für dieselbe Phase erzeugten elektrischen Signal gesteuert wird und unabhängig von den anderen Elektrode in Bezug auf das Bad (3) verstellt wird, bis die Länge ihres Lichtbogens der Länge der Bogen der beiden anderen Elektroden und infolge dessen der gewünschten gemeinsamen Länge für die drei Bogen (1, 1', 1'') gleicht.

5. Verfahren nach Anspruch 1 zum Regeln der Länge des Lichtbogens (1) zwischen einer Elektrode (2) und einem zu schweißenden Werkstück (3) in einer Vorrichtung (Figuren 3, 7) zum Lichtbogen-Schweißen mit Gleichstrom oder alternativ vom Typ Schutzgas-Wolfram oder Schutzgas-Metall, gekennzeichnet durch die Schritte:

— bei einem Gleichstrom-Lichtbogen moduliert man den Versorgungsstrom des Lichtbogens, um ein akustisches Signal zu erzeugen;
— man nimmt das erzeugte akustische Signal auf;
— man filtert das aufgenommene akustische Signal bei seiner Grundfrequenz, die bei einem Gleichstrom-Lichtbogen dem Wert der Modulationsfrequenz gleicht, und bei einem Wechselstrom-Lichtbogen bei den doppelten Wert der Stromfrequenz hat;
— man vergleicht die Amplitude des gefilterten akustischen Signals mit einer einstellbaren Referenzamplitude (22), die der gewünschten Lichtbogenlänge entspricht, um den algebraischen Wert ihrer Differenz festzustellen und ein dem algebraischen Wert proportionales elektrisches Dauersignal (7) zu erzeugen; und

— man gibt das erzeugte elektrische Dauersignal (7) auf eine Steuervorrichtung (8), um die Elektrode (2) gegenüber dem zu schweißenden Werkstück (3) zu verstellen, bis die tatsächliche Länge des Lichtbogens (1) auf die gewünschte Länge gebracht ist.

6. Verfahren nach Anspruch 1 zum Regeln der Länge des Lichtbogens (1) zwischen einer Elektrode (2) und einem zu schweißenden Werkstück (3) in einer Vorrichtung zum Lichtbogen-Schweißen mit gepulstem Strom vom Typ Schutzgas-Wolfram (Fig. 6), gekennzeichnet durch die Schritte:

— man nimmt das natürlicherweise vom Schweißapparat durch die Stromimpulse erzeugte akustische Signal auf;
— man integriert die Amplitude (A) des bei jedem Impuls aufgenommenen Signals;
— man dividiert das integrierte Signal durch einen der Amplitude des Impulses proportionalen Wert (31);
— man vergleicht die Aplitude des integrierten und dividierten Signals mit einer einstellbaren Referenzamplitude (22), die einer gewünschten Lichtbogenlänge entspricht, um den algebraischen Wert ihrer Differenz festzustellen und ein dem algebraischen Wert proportionales elektrisches Dauersignal (7) zu erzeugen; und
— man gibt das erzeugte elektrische Dauersignal (7) auf eine Steuervorrichtung (8), um die Elektrode (2) gegenüber dem zu schweißenden Werkstück (3) zu verstellen, bis die tatsächliche Länge des Lichtbogens (1) auf die gewünschte Länge gebracht ist.

7. Verfahren nach Anspruch 1 zum Regeln der Länge des Lichtbogens (1) zwischen einer Elektrode (2) und einem zu schweißenden Werkstück (3) in einer Vorrichtung (Figuren 3, 7) zum Lichtbogen-Schweißen mit Gleichstrom oder alternativ vom Typ Schutzgas-Wolfram mit Zufuhr des Metalls in Form eines Metalldrahtes (13), gekennzeichnet durch die Schritte:

— bei einem Gleichstrom-Lichtbogen moduliert man den Versorgungsstrom des Lichtbogens, um ein akustisches Signal zu erzeugen;
— man nimmt das vom Lichtbogen erzeugte akustische Signal auf;
— man filtert das aufgenommene akustische Signal bei seiner Grundfrequenz, die bei einem Gleichstrom-Lichtbogen dem Wert der Modulationsfrequenz gleicht, und bei einem Wechselstrom-Lichtbogen den doppelten Wert der Stromfrequenz hat;
— man vergleicht die Amplitude des gefilterten akustischen Signals mit einer einstellbaren Referenzamplitude (22), die einer gewünschten Lichtbogenlänge entspricht, um den algebraischen Wert ihrer Differenz festzustellen und ein dem algebraischen Wert proportionales elektrisches Dauersignal (7) zu erzeugen;
— man gibt das erzeugte elektrische Dauersignal (7) auf eine Steuervorrichtung (8), um die Elektrode (2) gegenüber dem zu schweißenden Werkstück (3) zu verstellen, bis die tatsächliche Länge des Lichtbogens (1) auf die gewünschte Länge gebracht ist;
— gleichzeitig mit der bei der Grundfrequenz ausgeführten Filterung (21) des akustischen Signals erfasst man auch mit Hilfe einer elektronischen Schwelle (32) jedes der Geräusche, welche das in Form des Drahtes (13) zugeführte Metall erzeugt, wenn es in Form kleiner Tröpfchen auf das zu schweißende Werkstück (3) herabfällt;
— man vergleicht die Frequenz der erfassten Geräusche mit einer einstellbaren ·gewünschten Referenzfrequenz (34), welche dem Versprühen einer bestimmten Anzahl von Tröpfchen entspricht, um den algebraischen Wert der Differenz festzustellen und ein diesem algebraischen Wert der Differenz der Frequenzen des Versprühens der Tröpfchen proportionales elektrisches Dauersignal (14) zu erzeugen; und
— man gibt das zuvor erzeugte elektrische Dauersignal (14) auf eine Steuervorrichtung (15), um den metallischen Zuführungsdraht (13) gegenüber dem Lichtbogen (1) zu verstellen, bis die tatsächliche Frequenz des Versprühens der Metalltröpfchen mit der gewünschten Frequenz übereinstimmt.

8. Vorrichtung zum Regeln der Länge eines Lichtbogens (1) zwischen zwei Elementen (2, 3) zur Durchführung des Verfahrens nach einem der Ansprüche 1 bis 7, gekennzeichnet durch:

— Mittel (10) zum Modulieren des Speisestromes des Lichtbogens (1), sofern er nicht schon moduliert ist, um ein akustisches Signal zu erzeugen;
— Mittel (4) zum Aufnehmen des vom Lichtbogen erzeugten akustischen Signals;
— Mittel (23) zum Vergleichen der Amplitude des aufgenommenen akustischen Signals, die praktisch eine direkte Funktion der tatsächlichen Lichtbogenlänge ist, mit einer Referenzamplitude (22), die einer gewünschten Lichtbogenlänge entspricht, um den algebraischen Wert ihrer Differenz festzustellen; und
— vom festgestellten algebraischen Wert gesteuerte Mittel (8), um mindestens das eine (2) der beiden Elemente der Lichtbogenmaschine proportional zum festgestellten algebraischen Wert zu verstellen, um die tatsächliche Länge (L.) des Lichtbogens (1) zu vergrößern oder zu verkleinern und somit die tatsächliche Länge auf die gewünschte Länge zu bringen.

9. Vorrichtung nach Anspruch 8 zum Regeln der Länge eines Lichtbogens (1) zwischen einer Elektrode (2) und dem Bad (3) in einem Gleichstrom-Lichtbogenofen (Figuren 1, 4), gekennzeichnet durch:

— Mittel (10) zum Modulieren des Versorgungs-Gleichstroms des Lichtbogens (1), um ein akustisches Signal zu erzeugen;
— Mittel (4) zum Aufnehmen des erzeugten akustischen Signals;
— Mittel (21) zum Filtern des aufgenommenen akustischen Signals bei seiner Grundfrequenz ($\omega$), die dem Wert der Modulationsfrequenz gleich ist;
— Mittel (23) zum Vergleichen der Amplitude des gefilterten akustischen Signals (A) mit einer einstellbaren Referenzamplitude (22), die einer gewünschten Lichtbogenlänge entspricht, um den algebraischen Wert ihrer Differenz festzustellen und ein dem algebraischen Wert proportionales elektrisches Dauersignal (7) zu erzeugen; und
— vom erzeugten elektrischen Dauersignal (7) gesteuerte Mittel (8), um die Elektrode (2) gegenüber dem Bad (3) zu verstellen, bis die tatsächliche Länge des Lichtbogens (1) auf die gewünschte Länge gebracht ist.

10. Vorrichtung nach Anspruch 8 zum gleichzeitigen Regeln der jeweiligen Länge von Lichtbogen (1, 1', 1'') zwischen den drei Elektroden (2, 2', 2'') und dem Bad (3) eines Dreiphasen-Drehstrom-Lichtbogenofens (Figuren 2, 5), gekennzeichnet durch:

— Mittel (4) um in gleichem Abstand von den drei Elektroden (2, 2', 2'') das vom Ofen natürlicherweise erzeugte Geräusche aufzunehmen;
— Mittel (21) zum Filtern des aufgenommenen akustischen Signals bei einer ersten Frequenz (360 Hz), welche gleich dem sechsfachen Wert der Frequenz (60 Hz) des dreiphasigen Stromes (11) ist;
— Mittel (23) zum Vergleichen der Amplitude des bei der ersten Frequenz (360 Hz) gefilterten akustischen Signals (A) mit einer einstellbaren Referenzamplitude (2), die einer gewünschten Lichtbogenlänge entspricht, um den algebraischen Wert ihrer Differenz festzustellen und ein dem algebraischen Wert proportionales Dauersignal zu erzeugen; und
— drei voneinander unabhängige vom erzeugten elektrischen Dauersignal gleichzeitig gesteuerte Vorrichtungen (8, 8', 8''), welche jeweils einer der drei Elektroden (2, 2', 2'') zugeordnet sind, um diese gleichzeitig alle drei gemeinsam gegenüber dem Bad zu verstellen, bis die gemeinsame tatsächliche Länge ihrer Lichtbogen (1, 1', 1'') auf die gewünschte Länge gebracht ist.

11. Vorrichtung nach Anspruch 10, gekennzeichnet durch:

— Mittel (24) zum Filtern des aufgenommenen akustischen Signals bei einer zweiten Frequenz (120 Hz), welche gleich dem doppelten Wert der Frequenz (60 Hz) des dreiphasigen Stromes (11) ist;
— Mittel (26, 26', 26'') zum Vergleichen der Phase des bei dieser zweiten Frequenz (120 Hz) gefilterten Signals mit einer jeden Phase des dreiphasigen Stromes, um den Wert der algebraischen Differenz der Phase des gefilterten Signals in Bezug auf jede der Phasen ($\varphi$, $\varphi'$, $\varphi''$) des dreiphasigen Stromes festzustellen und getrennt drei unterschiedliche elektrische Dauersignale zu erzeugen, welche eine Funktion der jeweiligen algebraischen Werte der Differenz zwischen der Phase des gefilterten Signals und und jeder der Phasen des dreiphasigen Stromes (11) sind; und
— Mittel (27, 27', 27''), um die drei getrennt erzeugten elektrischen Signale an drei Steuervorrichtungen (8, 8', 8'') der Elektroden (2, 2', 2'') zu geben, so daß die von einer bestimmten Phase versorgte Elektrode von dem für dieselbe Phase erzeugten elektrischen Signal gesteuert ist, und daß sie unabhängig von den anderen Elektroden in Bezug auf das Bad (3) verstellt ist, bis die Länge ihres Lichtbogens gleich der Länge der Bogen der beiden anderen Elektroden ist und infolge dessen gleich der gemeinsamen gewünschten Länge für die drei Bogen (1, 1', 1'') ist.

12. Vorrichtung nach Anspruch 8 zum Regeln der Länge des Lichtbogens (1) zwischen einer Elektrode (2) und einem zu schweißenden Werkstück (3) in einer Vorrichtung (Figuren 3, 7) zum Lichtbogen-Schweißen vom Typ Schutzgas-Wolfram oder Schutzgas-Metall, gekennzeichnet durch:

— Mittel (10) zum Modulieren des Versorgungsstroms des Lichtbogens, sofern er nicht bereits moduliert ist, um ein akustisches Signal zu erzeugen;
— Mittel (4) zum Aufnehmen des erzeugten akustischen Signals;
— Mittel (21) zum Filtern des aufgenommenen akustischen Signals bei seiner Grundfrequenz, die dem Wert der Modulationsfrequenz gleich ist;
— Mittel (23) zum Vergleichen der Amplitude des gefilterten akustischen Signals mit einer einstellbaren Referenzamplitude (22), die der gewünschten Lichtbogenlänge entspricht, um den algebraischen Wert ihrer Differenz festzustellen und ein dem algebraischen Wert proportionales elektrisches Dauersignal (7) zu erzeugen; und
— von erzeugten elektrischen Dauersignal (7) gesteuerte Mittel (8), um die Elektrode (2) gegenüber dem zu schweißenden Werkstück (3) zu verstellen, bis die tatsächliche Länge des Lichtbogens (1) auf die gewünschte Länge gebracht ist.

13. Vorrichtung nach Anspruch 8 zum Regeln der Länge des Lichtbogens (1) zwischen einer Elektrode (2) und einem zu schweißenden Werkstück (3) in einer Vorrichtung zum Lichtbogen-Schweißen mit gepulstem Strom vom Typ Schutzgas-Wolfram (Fig. 6), gekennzeichnet durch:

— Mittel (4) zum Aufnehmen des natürlicherweise vom Schweißapparat durch die Stromimpulse erzeugten akustischen Signals;
— Mittel (28) zum Integrieren der Amplitude (A) des bei jedem Impuls ausgesandten Signals, wobei sich die Integrationsmittel nach jedem Impuls wider auf Null zurückstellen;
— Mittel (30) zum Dividieren des integrierten Signals durch einen der Amplitude des Impulses proportionalen Wert (31);
— Mittel (23) zum Vergleichen der Amplitude des integrierten und dividierten Signals mit einer einstellbaren Referenzamplitude (22), die einer gewünschten Lichtbogenlänge entspricht, um den algebraischen Wert ihrer Differenz festzustellen und ein dem algebraischen Wert proportionales elektrisches Dauersignal (7) zu erzeugen; und
— vom erzeugten elektrischen Dauersignal (7) gesteuerte Mittel (8), um die Elektrode (2) gegenüber dem zu schweißenden Werkstück (3) zu verstellen, bis die tatsächliche Länge des Lichtbogens (1) auf die gewünschte Länge gebracht ist.

14. Vorrichtung nach Anspruch 8 zum Regeln der Länge des Lichtbogens (1) zwischen einer Elektrode (2) und einem zu schweißenden Werkstück (3) in einer Vorrichtung (Figuren 3, 7) zum Lichtbogen-Schweißen mit Gleichstrom oder alternativ vom Typ Schutzgas-Wolfram mit Zufuhr des Metalls mittels eines Metalldrahtes, gekennzeichnet, durch:

— beim Gleichstrom-Lichtbogen Mittel (10) zum Modulieren des Versorgungsstroms des Lichtbogens, um ein akustisches Signal zu erzeugen;
— Mittel (4) zum Aufnehmen des von Lichtbogen erzeugten akustischen Signals;
— Mittel (21) zum Filtern des aufgenommenen akustischen Signals bei seiner Grundfrequenz, die bei einem Gleichstrom-Lichtbogen dem Wert der Modulationsfrequenz gleich ist, und bei einem Wechselstrom-Lichtbogen der doppelte Wert der Stromfrequenz ist;
— Mittel (23) zum Vergleichen der Amplitude des gefilterten akustischen Signals mit einer einstellbaren Referenzamplitude (22), die der gewünschten Lichtbogenlänge entspricht, um den algebraischen Wert ihrer Differenz festzustellen und ein dem algebraischen Wert proportionales elektrisches Dauersignal (7) zu erzeugen;
— von dem erzeugten elektrischen Dauersignal (7) gesteuerte erste Mittel (8), um die Elektrode (2) gegenüber dem zu schweißenden Werkstück (3) zu verstellen, bis die tatsächliche Länge des Lichtbogens (1) auf die gewünschte Länge gebracht ist;

— Mittel mit Schwelle (32) um jedes der Geräusche zu erfassen, welche das in Form des Drahtes (13) zugeführte Metall erzeugt, wenn es als kleine Tröpfchen auf das zu schweißende Werkstück (3) herabfällt;
— Mittel (33) zum Vergleich der Frequenz der erfassten Geräusche mit einer einstellbaren gewünschten Referenzfrequenz (34), welche dem Versprühen einer bestimmten Anzahl von Tröpfchen entspricht, um den algebraischen Wert dieser Differenz festzustellen und eine dem algebraischen Wert der Differenz der Frequenzen des Versprühens der Tröpfchen proportionales elektrisches Dauersignal (14) zu erzeugen; und
— von dem zuvor erzeugten elektrischen Dauersignal (14) gesteuerte zweite Mittel (15), um den metallischen Zuführungsdraht (13) gegenüber dem Lichtbogen (1) zu verstellen, bis die tatsächliche Frequenz des Versprühens der Metalltröpfchen mit der gewünschten Frequenz entspricht.

**Claims**

1. Method for controlling the length of an electrical arc (1) between two elements (2, 3) in an arc generating machine, characterized in that it comprises the steps of:
   modulating the arc generating current if necessary for generating an acoustical signal;
   detecting the acoustical signal generated by the arc (1);
   comparing the amplitude of the so detected signal which, in practice, is a direct function of the actual length of the arc (1), to a reference amplitude (22) corresponding to the desired length of the arc, to determine the algebric value of their difference; and
   monitoring at least one (2) of the elements to the machine between which the arc forms to move said at least one element proportionally to the so determined algebric value and thus to increase or reduce the actual length (L) of the arc and bring it back to the desired length.

2. Method according to claim 1 for controlling the length of an electrical arc (1) between the electrode (2) and the bath (3) in an arc furnace supplied with a DC current (Figs. 1, 4), characterized in that it comprises the steps of:
   slightly modulating the DC current supplied to the arc (1) for generating an acoustical signal;
   detecting the so generated signal;
   filtering the so detected signal at its basic frequence ($\omega$) that is equal to the frequency of modulation;
   comparing the amplitude of the filtered signal (A) to an adjustable reference amplitude (22) corresponding to a desired length of the electrical arc in order to determine the algebric value of their difference and to produce a continuous electrical signal (7) proportional to said algebrical value; and
   supplying the so produced continuous electrical signal (7) to a device (8) for moving the electrode (2) with respect to the bath (3) until the actual length of the arc is equal to the desired length.

3. Method according to claim 1 for simultaneously controlling the respective lengths of the electrical arcs (1, 1', 1'') between the three electrodes (2, 2', 2'') and the bath (3) of a three phased current arc furnace (Figs. 2, 5) characterized in that it comprises the steps of:

detecting the acoustical signal naturally generated by the arcs at equal distance from the three electrodes (2, 2', 2'');

filtering the so detected acoustical signal at a first frequency (360 H$_z$) equal to six times the basic frequency (60 H$_z$) of the three phased current (11);

comparing the amplitude of the acoustical signal (A) filtered at said first frequency (360 H$_z$) to an adjustable reference amplitude (22) corresponding to a desired length of the arcs in order to determine the algebric value of their difference and to produce a continuous electrical signal proportional to said algebric value; and

supplying the so produced, continuous electrical signal simultaneously to three independent devices (8, 8', 8'') respectively associated to the three electrodes (2, 2', 2''), for simultaneously moving these electrodes altogether with respect to the bath (3) until the actual common length of the three arcs (1, 1', 1'') is equal to the desired length.

4. Method according to claim 3, characterized in that it comprises the following additional steps:

filtering the detected acoustical signal at a second frequency (120 H$_z$) equal to twice the value of the basic frequency (60 H$_z$) of the three phased (11), simultaneously to the first filtering step;

comparing the phase of the signal filtered at this second frequency (120 H$_z$) to each of the phases of the three phased current to determine the algebric value of the difference between the phase of the filtered signal and each of the phases (4, 4', 4'') of the three phased current and separatively to produce three continuous and distinct, electrical signals proportional to the respective algebric values of the differences between the phase of the filtered signal and the phases of the three phased current (11); and

supplying the separately produced electrical signals to the three moving devices (8, 8', 8'') respectively associated to the three electrodes (2, 2', 2'') of the arc furnace so that the electrode in one given phase be monitored to the electrical signal produced for the same phase and be moved separatively from the other electrodes with respect to the bath (3) until the length of its arc is equal to the length of the arcs of the other electrodes and accordingly to the desired common length of the three arcs (1, 1', 1'').

5. Method according to claim 1 for controlling the length of an electrical arc (1) between the electrode (2) and a piece (3) of metal to be welded in a gas-tungstene or gas-metal arc welding machine (Figs 3, 7), comprising the steps of:

slightly modulating the DC current supplied to the arc for generating an acoustical signal if the supplying current is DC;

detecting the acoustical signal generated by the arc in a natural manner or due to the modulation of the current;

filtering to so-detected signal at its basic frequence equal to the frequence of modulation when the arc is supplied with DC current or to twice the frequency of the current when the arc is supplied with AC current;

comparing the amplitude of the filtered signal to an adjustable reference amplitude (22) corresponding to a desired length of the electrical arc in order to determine the algebric value of their difference and to produce a continuous electrical signal (7) proportional to said algebrical value; and

supplying the so produced continuous electrical signal (7) to a device (8) for moving the electrode (2) with respect to the piece to be welded (3) until the actual length of the arc (1) is equal to the desired length.

6. Method according to claim 1 for controlling the length of an electrical arc (1) between the electrode (2) and a piece (3) of metal to be welded in a gas-tungstene arc welding machine operating under a pulsed current (Fig. 6), characterized in that it comprises the steps of:

detecting the acoustical signal naturally generated by the machine due to the pulsation of current;

integrating the amplitude (A) of the so-detected signal for each pulsation;

dividing the integrated signal by a value (31) proportional to the amplitude of the pulsation;

comparing the amplitude of the so-divided acoustical signal to an adjustable reference amplitude (22) corresponding to the desired length of the arc in order to determine the algebric value of their difference and to produce a continuous electrical signal (7) proportional to said algebrical value; and

supplying the so-produced continuous electrical signal (7) to a device (8) for moving the electrode (2) with respect to the piece (3) to be welded until the actual length of the arc (1) is equal to the desired length.

7. Method according to claim 1 for controlling the length of an electrical arc (1) between the electrode (2) and the piece (3) of metal to be welded in a gas-tungstene arc welding machine operating with additional metal wire feeding (13), characterized in that it comprises the steps of:

when the arc is supplied with DC current, slightly modulating the DC current for generating an acoustical signal;

detecting the acoustical signal generated by the arc either naturally or by modulation of the current;

filtering the so detected signal at its basic frequency that is equal to the frequency of modulation when the arc is supplied with DC current or to twice the basic frequency of the current when the arc is supplied with AC current;

comparing the amplitude of the filtered signal to an adjustable reference amplitude (22) corresponding to a desired length of the electrical arc in order to determine the algebric value of their difference and to produce a continuous electrical signal (7) proportional to said algebrical value; and

supplying the so produced continuous electrical signal (7) to a device (8) for moving the electrode with respect to the piece (3) of metal to be welded until the actual length of the arc is equal to the desired length;

simultaneously to the above mentioned filtering step (21) carried out at the basic frequence of the acoustical signal, detecting with an electronical threshold device (23) all the noises made by the metal droplets falling down from the metal wire (13) to the piece (3) to be welded;

comparing the frequency of the so detected noises to an adjustable reference frequency (34) corresponding to the projection of given number of droplets in order to determine the algebric value of their difference and to produce a continuous electrical signal (14) proportional to said algebric value; and

supplying the so produced continuous electrical signal (14) to a device (15) for moving the metal wire (13) with respect to the arc (1) until the actual frequency at which the droplets of metal are projected correspond to the desired frequency.

8. Device for controlling the length of an electrical arc (1) between two elements (2, 3) in order to carry out the method of claims 1 to 7, characterized in that it comprises:

means (10) for modulating the arc generating current if necessary to generate an acoustical signal;

means (4) for detecting the acoustical signal generated by the arc;

means (23) for comparing the amplitude of the so-detected signal which, in practice, is a direct function of the actual length of the arc, to a reference amplitude (22) corresponding to a desired length of the arc, to determine the algebric value of their difference; and

means (8) monitored by the so determined algebric value for moving at least one (2) of the element of the machine proportionally to said determined algebric value so as to increase or reduce the actual length of the arc and to bring this actual length back to the desired length.

9. Device according to claim 8 for controlling the length of an electrical arc (1) between the electrode (2) and the bath (3) in an arc furnace supplied with a DC current, (Figs. 1, 4), characterized in that the device comprises:

means (10) for slightly modulating the DC current supplied to the arc (1) for generating an acoustical signal;

means (4) for detecting the so generated signal;

means (21) for filtering the so detected signal at its basic frequence (ω) that is equal to the frequence of modulation;

means (23) for comparing the amplitude of the filtered signal (A) to an adjustable reference amplitude (22) corresponding to a desired length of the electrical arc in order to determine the algebric value of their difference and to produce a continuous electrical signal (7) proportional to said algebrical value; and

means (8) monitored the so produced continuous electrical signal (7) for moving the electrode (2) with respect to the bath (3) until the actual length of the arc (1) is equal to the desired length.

10. Device according to claim 8 for simultaneously controlling the respective lengths of the electrical arcs (1, 1', 1'') between the three electrodes (2, 2', 2'') and the bath (3) of a three phased current arc furnace (Figs. 2, 5), characterized in that it comprises:

means (4) for detecting the acoustical signal naturally generated by the arcs at equal distance from the three electrodes (2, 2', 2'');

means (21) for filtering the so detected acoustical signal at a first frequency (360 $H_z$) equal to six times to the basic frequency (60 $H_z$) of the three phase current (11);

means (23) for comparing the amplitude of the acoustical signal (A) filtered at said first frequency (360 $H_z$) to an adjustable reference amplitude (22) corresponding to a desired length of the arc in order to determine the algebric value of their difference and to produce the continuous electrical signal proportional to said algebric value; and

three independent means (8, 8', 8'') simultaneously monitored by the so produced, continuous acoustical signal and respectively associated to the three electrodes (2, 2', 2''), for simultaneously moving these electrodes altogether with respect to the bath (3) until the actual common length of the three arcs (1, 1', 1'') is equal to the desired length.

11. Device according to claim 10, characterized in that it further comprises:

additional means (24) for filtering the detected acoustical signal at a second frequency (120 $H_z$) equal to twice the value of the basic frequency (60 $H_z$) of the three phased current (11),

means (26, 26', 26'') for comparing the phase of the signal filtered at this second frequency (120 $H_z$) to each of the phases of the three phased current to determine the algebric value of the difference between the phase of the filtered signal and each of the phases (φ, φ', φ'') of the three phased current and separatively to produce three continuous and distinct, electrical signals proportional to the respective algebric values of the differences between the phase of the filtered signal and the phases of the three phased current (11); and

means (27, 27', 27'') for supplying said separately produced electrical signals to the three moving means (8, 8', 8'') respectively associated to the three electrodes (2, 2', 2'') of the arc furnace so that the electrode in one given phase be monitored to the electrical signal produced for the same phase and be moved separatively from the other electrodes with respect to the bath (3) until the length of its arc is equal to the length of the arcs of the other electrodes and accordingly to the desired common length of the three arcs (1, 1', 1'').

12. Device according to claim 3 for controlling the length of an electrical arc (1) between the electrode (2) and a piece (3) of metal to welded in gas-tungstene or gas-metal arc welding machine (Figs. 3, 7) characterized in that it comprises:

means (10) for slightly modulating the DC current supplied to the arc for generating an acoustical signal if the supplying current is DC;

means (4) for detecting the acoustical signal generated by the arc;

means (21) for filtering to so-detected signal at its basic frequence equal to the frequence of modulation when the arc is supplied with DC current or to twice the frequency of the current when the arc is supplied with AC current;

means (23) for comparing the amplitude of the filtered signal to an adjustable reference amplitude (22) corresponding to a desired length of the electrical arc in order to determine the algebric value of their difference and to produce a continuous electrical signal (7) proportional to said algebrical value; and

means (8) monitored by the so produced continuous electrical signal (7) for moving the electrode (2) with respect to the piece (3) to be welded until the actual length of the arc (1) is equal to the desired length.

13. Device according to claim 8 for controlling the length of an electrical arc (1) between the electrode (2) and a piece (3) of metal to be welded in a gas-tungstene arc welding machine operating under a pulsed current (Fig. 6), characterized in that it comprises:

means (4) for detecting the acoustical signal naturally, generated by the machine due to the pulsation of current;

means (28) for integrating the amplitude (A) of the so-detected signal for each pulsation, said means (28) being reset after each pulsation;

means (30) for dividing the integrated signal by a value (31) proportional to the amplitude of the pulsation;

means (23) for comparing the amplitude of the so-divided acoustical signal to an adjustable reference amplitude (22) corresponding to the desired length of the arc in order to determine the algebric value of their difference and to produce a continuous electrical signal (7), proportional to said algebrical value; and

means (8) monitored by the so-produced continuous electrical signal (7) for moving the electrode (2) with respect to the piece (3) to be welded until the actual length of the arc (1) is equal to the desired length.

14. Device according to claim 1 for controlling the length of an electrical arc (1) between the electrode (2) and the piece (3) of metal to be welded in a gas-tungstene arc welding machine operating with additional metal wire feeding (13) (Figs. 3, 7), characterized in that it comprises:

means (10) for slightly modulating the DC current for generating an acoustical signal when the arc is supplied with DC current;

means (4) for detecting the acoustical signal generated by the arc either naturally or· by modulation of the current;

means (21) for filtering the so detected signal at its basic frequency that is equal to the frequency of modulation when the arc is supplied with DC current or to twice the basic frequency of the current when the arc is supplied with AC current;

means (23) for comparing the amplitude of the filtered signal to an adjustable reference amplitude (22) corresponding to a desired length of the electrical arc in order to determine the algebric value of their difference and to produce a continuous electrical signal (7) proportional to said algebrical value;

first means (8) monitored by the so produced continuous electrical signal (7) for moving the electrode (2) with respect to the piece (3) of metal to be welded until the actual length of the arc (1) is equal to the desired length;

threshold means (32) for detecting all the noises made by the metal droplets falling from the metal wire (13) down to the piece (3) to be welded;

means (33) for comparing the frequency of·the so detected noises to an adjustable reference frequency (34) corresponding to the projection of given number of droplets in order to determine the algebric value of their difference and to produce a continuous electrical signal (14) proportional to said algebric value; and

second means (15) monitored by the continuous electrical signal (14) for moving the metal wire (13) with respect to the arc (1) until the actual frequency at which the droplets of metal are projected correspond to the desired frequency.

FIG. 1

FIG. 2

FIG. 3

FIG. 4

0 066 502

FIG. 5

FIG. 6

FIG. 7

5